# EUROPÄISCHE PATENTSCHRIFT

(11) **EP 0 402 830 B1**
(45) Veröffentlichungstag und Bekanntmachung des Hinweises auf die Patenterteilung: **25.08.1993**
(21) Anmeldenummer: 90111008.0
(22) Anmeldetag: 11.06.1990
(51) Int. Cl.: B23K 26/00

(54) **Verfahren zur Regelung des Temperaturverlaufes an Lötstellen beim Laserlöten**
Method for controlling temperature course at soldering points during laser soldering
Procédé pour régler l'allure de température à des points de soudage lors du soudage par laser

(30) Priorität: 15.06.1989 DE 3919618
(43) Veröffentlichungstag der Anmeldung: 19.12.1990
(73) Patentinhaber: Siemens Nixdorf Informationssysteme Aktiengesellschaft, 33102 Paderborn (DE)
(72) Erfinder: Diegelmann, Michael, Dr., D-8000 München 71 (DE); Koch, Volker-Ekkehardt, Dr., D-8024 Oberhaching (DE)
(74) Vertreter: Fuchs, Franz-Josef, Dr.-Ing.

(56) Entgegenhaltungen:
- EP-A- 0 285 785
- DE-A- 3 733 147
- DE-A- 3 820 848

## Beschreibung

Die Erfindung betrifft ein Verfahren zur Regelung des Temperaturverlaufes an Lötstellen beim Laserlöten unter Einsatz eines Infrarot-Strahlungspyrometers zur Messung der Lötstellentemperatur bei gleichzeitiger Detektion des Erreichens eines bekannten Temperaturfixpunktes beim Aufheizen der Lötstelle. Ein solches Verfahren ist aus der DE-A-3701013 bekannt.

Ein grundsätzliches Problem beim Laserlöten ist die Kontrolle der Energieeinkopplung und der Aufheizung von Lötstellen auf eine bestimmte Temperatur. Infolge starker Streuungen des Absorptionskoeffizienten von Lötstelle zu Lötstelle, unterschiedlicher Lotvoluminia und unterschiedlicher Oberflächenbeschaffenheiten ist beim Laserlöten die bloße Vorgabe der Laserleistung bzw. der Laserenergie in den meisten Fällen nicht ausreichend. Derartige Verfahrensweisen führen in Extremfällen zu kalten Lötstellen oder zu Zerstörungen am Werkstück, auf dem sich die Lötstellen befinden.

Zur Sicherstellung einer gleichbleibenden Qualität von Laserlötverbindungen müssen vor allem die durch unterschiedlichen Oxidationsgrad der Oberfläche oder durch unterschiedliche Verschmutzung bedingten Unterschiede im Absorptionsvermögen durch individuelle Anpassung an jedes einzelne Werkstück bzw. jede einzelne Lötstelle ausgeglichen werden.

Meßverfahren, die im wesentlichen durch Wärmeleitung die aktuelle Lötstellentemperatur messen, sind für Laserlötverfahren zu träge.

In der DE-PS 37 01 013 wird ein Verfahren zur Temperaturbestimmung unter Einsatz eines Infrarotstrahlungspyrometers beschrieben. Die Infrarotemission der Lötstelle wird über das Infrarotstrahlungspyrometer aufgenommen und als relatives Maß für die Lötstellentemperatur ausgewertet. Hierbei wird das Phänomen ausgenutzt, daß bei Erwärmung der Lötstelle mittels konstanter Laserleistung der weitgehend zeitlineare Anstieg der Temperatur an der Lötstelle beim Erreichen des Lotschmelzpunktes einen Haltepunkt aufweist. Die Zeit des Aufschmelzens entspricht der Länge des Haltepunktes und ist die Zeit, die erforderlich ist, um dem Lot die latente Wärme, die Schmelzwärme, zuzuführen. Diese Diskontinuität im zeitlichen Anstieg des der Lötstellentemperatur entsprechenden Infrarotsignales wird in der erwähnten Patentschrift als Kennzeichen für das Erreichen der Schmelztemperatur des Lotes ausgewertet.
Dieses Verfahren weist meßtechnische Unsicherheiten auf. Die Reproduzierbarkeit des gemessenen Infrarotsignales ist im wesentlichen nur dann gegeben, wenn sämtliche auf einem Werkstück befindlichen Lötstellen annähernd gleich aufgebaut und gleich groß sind. Zudem müssen die Lötstellen eine bestimmte Mindestgröße aufweisen, da sonst die Unstetigkeit im Temperatur-Zeit-Verlauf beim Aufschmelzen des Lotes nicht genügend ausgeprägt ist und nicht zuverlässig detektiert werden kann.

Der Erfindung liegt die Aufgabe zugrunde, ein temperaturgeregeltes Verfahren zum Laserlöten bereitzustellen, das die Messung der Temperatur von Lötstellen unabhängig von Lotvolumen oder Oberflächenbeschaffenheit der Lötstelle mit guter Reproduzierbarkeit ermöglicht.

Die Lösung dieser Aufgabe wird durch die Merkmale des Ansprüches 1 wiedergegeben.

Der Erfindung liegt die Erkenntnis zugrunde, daß eine relative Temperaturmessung mittels eines Infrarotstrahlungspyrometers durch eine Kalibrierung desselben anhand zuvor ermittelter Eichkurven in Kombination mit der Detektion eines bekannten Temperaturfixpunktes in eine absolute Temperaturmessung überführt werden kann. Entsprechend dem vom Pyrometer erfaßten Ist-Wert kann die Laserleistung zur Erzielung eines vorgegebenen Temperaturverlaufes an der Lötstelle über das kalibrierte Infrarot-Strahlungspyrometer und einem Regler so nachgeregelt werden, daß die gewünschte Temperaturführung an der Lötstelle erreicht wird. Zur Kalibrierung wird eine Schar von Eichkurven aufgestellt, die in einem Diagramm, in dem die Temperatur und das Ausgangssignal des Infrarot-Strahlungspyrometers gegeneinander aufgetragen sind, eine Kurvenschar für jeweils unterschiedliche Emissionsfaktoren ε der Lötstelle bilden. Zur Eichung wird das Erreichen des Temperaturfixpunktes an der Lötstelle detektiert und dem gleichzeitig anliegenden Ausgangssignal des Infrarotstrahlungspyrometers zugeordnet, womit eine Kurve aus der Schar der Eichkurven ausgewählt wird, die diesen beiden aufgenommenen Werten entspricht. Somit ist das Infrarot-Strahlungspyrometer kalibriert und zeigt für den Fall, daß der Emissionsfaktor ε der Lötstelle sich nicht mehr ändert, genau die an der Lötstelle vorhandene Temperatur an. Somit kann ausgehend von diesem Temperaturfixpunkt mittels eines entsprechenden Regelkreises über den Laser und das kalibrierte Infrarot-Strahlungspyrometer ein vorgegebener Temperatur-Zeit-Verlauf mit geregelter Temperaturführung zuverlässig, insbesondere auch eine für eine bestimmte Zeit konstante Arbeitstemperatur eingehalten werden.

In einer speziellen Ausführung der Erfindung wird als Temperaturfixpunkt der Schmelzpunkt des Lotes detektiert. Dies geschieht durch die Auswertung eines Ultraschallsignales, das durch die Bestrahlung der Lötstelle oder ihrer Umgebung mit intensitätsmoduliertem Laserlicht erzeugt wird und das durch einen starken Abfall seiner Amplitude beim Aufschmelzen des Lotes diesen Zeitpunkt exakt erkennen läßt. Das Ultraschallsignal wird über einen Ultraschallsensor aufgenommen, der am Werkstück oder an dessen Halterung angekoppelt ist. Verfahren zur berührungslosen Ultraschallmessungen sind ebenfalls einsetzbar.

Sollen gleichzeitig mehrere, aufgrund der Beschaffenheit des Werkstückes nicht gegeneinander schallisolierte Lötstellen mittels Laserlicht bearbeitet werden, so kann durch einen oder mehrere am Werkstück oder an dessen Halterung angebrachte Ultraschallsensoren die Ermittlung von einzelnen, jeweils einer Lötstelle zugeordneten Ultraschallsignalen nicht ohne weiteres durchgeführt werden. Da an den einzelnen Lötstellen die Amplituden der Ultraschallsignale zu unterschiedlichen Zeitpunkten zusammenbrechen, können die Aufschmelzzeitpunkte der einzelnen Lötstellen nicht unabhängig von den übrigen Lötstellen ermittelt werden, sondern es ist lediglich das Aufschmelzen der zuletzt aufschmelzenden Lötstelle erkennbar. Da die gleichzeitige Bearbeitung von Lötstellen aus Zeitgründen jedoch der sequentiellen Bearbeitung vorzuziehen ist, ist ein Kriterium zur Unterscheidung verschiedener, jeweils einer Lötstelle zugeordneter Ultraschallsignale notwendig. Hier ist es besonders vorteilhaft, das zur Bearbeitung von Lötstellen eingesetzte Laserlicht jeweils mit unterschiedlicher Frequenz in der Intensität zu modulieren. Es hat sich gezeigt, daß die Frequenz der einzelnen Ultraschallsignale der Modulationsfrequenz des jeweils eingestrahlten Laserlichtes entspricht. Somit kann der starke Abfall der Amplitude des Ultraschallsignales separat detektiert werden.

Eine andere Ausführungsform der Erfindung benutzt als Temperaturfixpunkt die Curie-Temperatur einer Sensorsubstanz, die entweder zum Werkstück im Bereich der Lötstelle gehört oder in gutem thermischen Kontakt mit dieser aufgebracht wird. Die Curie-Temperatur der Sensorsubstanz liegt für das jeweilige Verfahren fest, ist aber durch entsprechende Wahl der Sensorsubstanz bestimmbar. Das Erreichen der Curie-Temperatur der Sensorsubstanz wird mittels eines Sensors erfaßt, wobei der Übergang zwischen Ferro- und Paramagnetismus detektiert wird.

Im folgenden wird die Erfindung anhand eines Ausführungsbeispieles näher erläutert, wobei als Temperaturfixpunkt-Detektor ein Ultraschallsensor verwendet wurde.

Es ist selbstverständlich, daß zum Laserlöten eine Lötstelle für den Laserstrahl direkt oder indirekt zugänglich sein muß. Falls die Temperaturführung in Form einer Regelung ausgeführt sein soll, muß zusätzlich das hierfür nötige Infrarot-Strahlungspyrometer auf die Lötstelle gerichtet werden können. Zur Verbesserung der Handhabung ist es zweckmäßig, wenn für den Laserstrahl und das Infrarot-Strahlungspyrometer die gleiche Blickrichtung gewählt wird. Dies ist durch den Einsatz eines wellenlängenabhängigen Teilungsspiegels möglich, wobei dieser Teilungsspiegel etwa unter 45° zur Blickrichtung angewinkelt ist. Dabei wird das seitlich einfallende Laserlicht in die Blickrichtung, also auf der Lötstelle reflektiert, während der Teilungsspiegel für die Infrarotwellenlänge, die von der Lötstelle emittiert und vom Infrarotstrahlungspyrometer detektiert werden soll, durchlässig ist. Der umgekehrte Fall, d.h. ein gerader Durchgang des Laserstrahles und ein seitliches Herausreflektieren der Infrarot-Emission, ist ebenfalls möglich.

Die Aufheizung des Werkstückes erfolgt beispielsweise mit einem gepulsten Nd:YAG-Laser mit folgenden Daten:
- Pulsdauer 0,5 ms
- Pulsenergie 0,02 J
- Pulsfolgefrequenz 300 Hz
- mittlere Laserleistung 6 W
- Brennfleckdurchmesser 2,5 mm
- Frequenz der Intensitätsmodulation 300 kHz

Ein mit 100 kHz intensitätsmodulierter Dauerstrich-Nd:YAG-Laser wurde ebenfalls mit Erfolg eingesetzt.

Die Ultraschallemission wurde mit Hilfe eines Piezo-Wandlers, der eine Eigenresonanzfrequenz von ca. 300 kHz hatte und an der Werkstückhalterung angekoppelt war, aufgenommen. Das Ausgangssignal wurde durch einen Hochpaß (f_{g} = 100 kHz) gefiltert, anschließend verstärkt und gleichgerichtet. Anhand von Kontrollmessungen, bei denen neben der Aufnahme der Amplitude des Ultraschallsignales über einen am Werkstück angeschweißten Temperaturfühler die aktuelle Lötstellentemperatur erfaßt wurde, ließ sich nachweisen, daß der starke Abfall des Ultraschallsignales gleichzeitig mit dem Aufschmelzen des Lotes geschieht.

Die Versuche wurden an verzinnten Werkstücken aus CuSn6-Streifen mit den Abmessungen von Breite : Dicke : Lotschichtdicke = 3 mm : 0,2 mm : 10 bis 500 µm durchgeführt. Das Licht des Nd:YAG-Lasers mit einer Wellenlänge von 1,06 µm wurde im Infrarot-Strahlungspyrometer durch einen Filter zur Vermeidung von Störlicht herausgefiltert. Die für das Infrarot-Strahlungspyrometer wichtigen Wellenlängen liegen oberhalb von 2 µm. Mit den obengenannten Daten trat das Aufschmelzen des Lotes und somit der starke Abfall der Amplitude des Ultraschallsignales ca. 0,4 sec nach Einschalten des Lasers auf.

Die Einkopplung des Laserlichtes kann entweder direkt in das Lot oder indirekt über eines der miteinander zu verlötenden Teile erfolgen. Im Falle der indirekten Einkopplung der Laserenergie in das Lot muß der Ultraschall an dem nicht vom Laser bestrahlten Teil abgegriffen werden. Das Einsetzen des Schmelzvorganges wird mittels der Auswertung des Ultraschallsignales erfaßt und die geregelte Temperaturführung wird mittels eines Regelkreises durchgeführt, für den das Infrarotstrahlungspyrometer den Ist-Wert liefert. Solange die dem Laserstrahl zugewandte Lotoberfläche oder allgemein der Lotvorrat noch fest ist, führt die Absorption des intensitätsmoduliertem Laserlichtes zur Emission und Weiterleitung von Ultraschall mit der Frequenz der Intensitätsmodulation. Dieser Ultraschall breitet sich als Körperschall, bevorzugt als Transversalwelle, im Werkstück aus und wird mit Hilfe eines Ultraschallsensors (Piezo-Wandler) in Wechselspannungssignale umgewandelt. Die Erkennung des Aufschmelzens anhand des Ultraschallsignals ist weitestgehend unabhängig von Schwankungen im Lotvolumen verschiedener hintereinander bearbeiteter Lötstellen oder von Oberflächeneigenschaften der Lötstellen. Somit ist es möglich, das Erreichen der Schmelztemperatur exakt und schnell zu detektieren und oberhalb der Schmelztemperatur die Temperaturführung gemäß einem vorgegebenem Temperatur-Zeit-Verlauf zu regeln. Hierbei kommt eine entsprechend ausgelegte Hardware oder ein Rechner mit entsprechender Software zum Einsatz.

Die Schar von Eichkurven zur Kalibrierung des Infrarot-Strahlungspyrometers wird zuvor an einigen baugleichen, nur im Emissionsfaktor ε unterschiedlichen "Masterlötstellen" mit präzisen, aber zeitaufwendigeren Temperaturmeßverfahren ermittelt. Dabei wird zu einer Reihe von Lötstellentemperaturen jeweils das Ausgangssignal des Infrarot-Strahlungspyrometers festgehalten. Somit ergibt sich eine Schar von Eichkurven zu verschiedenen Emissionsfaktoren ε.

Die gesamten Messungen gehen davon aus, daß nach vollzogener Kalibrierung des Infrarot-Strahlungspyrometers keine Änderung des Emissionsfaktors ε an der Lötstelle mehr erfolgt. Die Erfahrung hat gezeigt, daß das flüssige Lot für längere Zeit, aber auf jeden Fall für die Bearbeitungszeit, einen gleichbleibenden Emissionsfaktor ε hat.

Werden mehrere auf einem Werkstück vorhandene Lötstellen temperaturkontrolliert mittels Laserlicht bearbeitet, so wird die Intensitätsmodulation des Laserlichtes mit unterschiedlichen, von Lötstelle zu Lötstelle wechselnden Frequenzen durchgeführt. Dies kann sowohl durch getrennte Modulation des in mehrere Strahlen aufgeteilten und jeweils auf eine Lötstelle gelenkten Lichtes eines einzigen Lasers, als auch durch Bestrahlung einer jeden Lötstelle mit einem eigenen, jeweils mit einer anderen Frequenz modulierten Laser erfolgen. Die Trennung der in den einzelnen Lötstellen induzierten Ultraschallsignale, deren Frequenz mit der jeweiligen Modulationsfrequenz des eingestrahlten Laserlichtes übereinstimmt, erfolgt durch entsprechend schmalbandige Filterung dieser Signale mit Hilfe geeigneter frequenzselektiver Elemente. Lötstellen, die bezüglich der Aufnahme des Ultraschallsignales akustisch gekoppelt sind, können somit problemlos bearbeitet werden. Der Ultraschallsensor ist in diesem Fall zweckmäßigerweise ein Breitbandwandler. Bei der Bearbeitung von hinreichend kleinen Lötstellen mit einem Lichtleistungsbedarf von maximal 1 W können beim derzeitigen Stand der Technik bereits Halbleiterlaser (Laserdioden) eingesetzt werden. Dies bietet den besonderen Vorteil, daß in einfacher Weise bezüglich der Intensitätsmodulation ein breiter Frequenzbereich abgedeckt wird.

Der gebräuchlichste Anwendungsfall eines erfindungsgemäßen Verfahrens ist die Regelung der Lötstellentemperatur vom Aufschmelzen des Lotes ab nach einem vorgegebenen Temperatur-Zeit-Verlauf. Typische Arbeitstemperaturen beim Weichlöten liegen bei ca. 250°C. Eine derartige Temperatur kann durch das beschriebene Verfahren auf ± 10°C genau eingestellt werden. Prinzipiell können Prozesse gesteuert oder geregelt werden, bei denen eine erfaßbare und auswertbare Menge an Infrarotstrahlung von der Prozeßstelle emittiert wird. Das gleiche Verfahren ist auch erfolgreich bei einem Hartlötprozeß bei ca. 700° C eingesetzt werden.

Der Temperaturbereich, innerhalb dessen der Abfall des Ultraschallsignales auftritt ist sehr schmal und liegt bei ca. 3°C.

## Patentansprüche

1. Verfahren zur Regelung des Temperaturverlaufes an Lötstellen beim Laserlöten unter gleichzeitiger Messung der Lötstellentemperatur durch ein Infrarot-Strahlungspyrometer und der Detektion des Erreichens eines bekannten Temperaturfixpunktes an der Lötstelle, **dadurch gekennzeichnet,** daß das Pyrometer an dem bekannten Temperaturfixpunkt kalibriert wird, indem anhand des zugehörigen Ausgangssignales des Pyrometers aus einer Schar von zuvor ermittelten Eichkurven eine dem aktuellen Emissionsfaktor der Lötstelle entsprechende Eichkurve bestimmt wird und mit dieser Eichkurve die Temperaturführung nach einem vorgegebenen Temperatur-Zeit-Verlauf an der Lötstelle geregelt wird.

2. Verfahren nach Anspruch 1, **dadurch gekennzeichnet,** daß der Temperaturfixpunkt die Schmelztemperatur des Lotes ist und die Detektion des Erreichens dieses Temperaturfixpunktes durch die Auswertung eines durch die Bestrahlung der Lötstelle mit intensitätsmoduliertem Laserlicht im Werkstück erzeugten Ultraschallsignales geschieht, wobei das Ultraschallsignal durch einen oder mehrere an dem die Lötstelle enthaltenden Werkstück oder seiner Halterung angekoppelten Ultraschallsensor aufgenommen wird und das Erreichen der Schmelztemperatur durch einen damit verbundenen starken Abfall der Amplitude des Ultraschallsignales feststellbar ist.

3. Verfahren nach Anspruch 2, **dadurch gekennzeichnet,** daß mehrere auf einem Werkstück vorhandene und nicht gegenseitig schallisolierte Lötstellen gleichzeitig mit intensitätsmoduliertem Laserlicht mit jeweils unterschiedlicher Modulationsfrequenz bearbeitet werden, wobei das jeweilig zugehörige Ultraschallsignal die entsprechende Modulationsfrequenz aufweist, somit die Ultraschallsignale den einzelnen Lötstellen zugeordnet werden können und der Temperaturverlauf an jeder Lötstelle einzeln regelbar ist.

4. Verfahren nach Anspruch 1, **dadurch gekennzeichnet,** daß der Temperaturfixpunkt die Curie-Temperatur einer zu einem Werkstück gehörenden oder in gutem thermischem Kontakt mit der Lötstelle stehenden Sensorsubstanz ist, wobei Lötstelle und angrenzende Sensorsubstanz annähernd die gleiche Temperatur aufweisen und das Erreichen der Curie-Temperatur in der Sensorsubstanz während des Lötens mittels eines Sensors zur Erkennung des damit verbundenen Überganges zwischen Ferro- und Para-Magnetismus festgestellt wird.

## Claims

1. Method for controlling the temperature variation at soldering points during laser soldering involving simultaneous measurement of the soldering point temperature by an infrared radiation pyrometer and the detection of the reaching of a known fixed temperature point at the soldering point, characterised in that the pyrometer is calibrated at the known fixed temperature point by using the associated output signal of the pyrometer to determine from a family of previously determined calibration curves a calibration curve corresponding to the current emission factor ε of the soldering point, and using this calibration curve to control the temperature guidance in accordance with a prescribed temperature/time characteristic at the soldering point.

2. Method according to Claim 1, characterised in that the fixed temperature point is the melting temperature of the solder and the detection of the reaching of this fixed temperature point is performed by evaluating an ultrasonic signal generated in the workpiece by the irradiation of the soldering point using intensity-modulated laser light, the ultrasonic signal being picked up by one or more ultrasonic sensors coupled to the workpiece containing the soldering point or to its holder, and it being possible to determine the reaching of the melting temperature from a sharp drop bound up therewith in the amplitude of the ultrasonic signal.

3. Method according to Claim 2, characterised in that a plurality of soldering points present on a workpiece and not mutually sound-insulated are simultaneously processed using intensity-modulated laser light of different modulation frequency in each case, the respectively associated ultrasonic signal having the corresponding modulation frequency so that the ultrasonic signals can be assigned to the individual soldering points and the temperature variation can be individually controlled at each soldering point.

4. Method according to Claim 1, characterised in that the fixed temperature point is the Curie temperature of a sensor substance belonging to a workpiece or in good thermal contact with the soldering point, the soldering point and adjacent sensor substance having approximately the same temperature and the reaching of the Curie temperature in the sensor substance during soldering being determined by means of a sensor for detecting the transition bound up therewith between ferromagnetism and paramagnetism.

## Revendications

1. Procédé de régulation de la courbe de température à des points de soudage, lors du soudage par laser, tout en mesurant la température des points de soudage par un pyromètre à rayonnement infrarouge et tout en détectant qu'un point fixe de température connu a été atteint au point de soudage, caractérisé en ce qu'il consiste à étalonner le pyromètre au point fixe de température connu en déterminant, au moyen du signal de sortie correspondant du pyromètre dans une famille de courbes d'étalonnage déterminées au préalable, une courbe d'étalonnage correspondant au facteur d'émission présent ε du point de soudage et à régler, par cette courbe d'étalonnage, la commande de température au point de soudage suivant une courbe température-temps prescrite.

2. Procédé suivant la revendication 1, caractérisé en ce que le point fixe de température est le point de fusion de la soudure et l'on détecte que ce point fixe de température est atteint en exploitant un signal ultrasonore produit dans la pièce en exposant le point de soudage à une lumière laser modulée en intensité, le signal ultrasonore étant détecté par un détecteur ultrasonore ou par plusieurs détecteurs ultrasonores couplés à la pièce comportant le point de soudage ou à son dispositif de fixation, et le fait que la température de fusion est atteinte pouvant être constaté par une forte diminution, qui en découle, de l'amplitude du signal ultrasonore.

3. Procédé suivant la revendication 2, caractérisé en ce qu'il consiste à traiter plusieurs points de soudage qui sont présents sur une pièce et qui ne sont pas isolés mutuellement du point de vue acoustique, en même temps par de la lumière laser modulée en intensité de fréquence de modulation différente, le signal ultrasonore correspondant ayant la fréquence de modulation adéquate, afin de pouvoir associer les signaux ultrasonores à chaque point de soudage et de pouvoir régler individuellement la courbe de température à chaque point de soudage.

4. Procédé suivant la revendication 1, caractérisé en ce que le point fixe de température est le point de Curie d'une substance de détection faisant partie d'une pièce ou en bon contact thermique avec le point de soudage, des points de soudage et la substance adjacente servant de détecteur ayant à peu près la même température, et le fait que le point de Curie est atteint dans la substance servant de détecteur étant constaté pendant le soudage au moyen d'un détecteur destiné à reconnaître le passage, qui en découle, entre le ferromagnétisme et le paramagnétisme.
